# EUROPEAN PATENT APPLICATION

(11) **EP 2 284 542 A1**
(43) Date of publication of application: **16.02.2011**
(21) Application number: 09729664.4
(22) Date of filing: 27.03.2009
(51) Int. Cl.: G01N 35/08, G01N 37/00

(54) **LIQUID DELIVERY CONTROL METHOD AND LIQUID DELIVERY CONTROL SYSTEM**

(30) Priority: 09.04.2008 JP 2008101094
(71) Applicant: ARKRAY, Inc., Kyoto-shi, Kyoto 601-8045 (JP)
(72) Inventor: HANAFUSA, Masahiro, Kyoto-shi Kyoto 601-8045 (JP)
(74) Representative: MacDougall, Alan John Shaw
(86) International application number: PCT/JP2009/056236
(87) International publication number: WO 2009/125682

(57) **Abstract**

The present invention provides a liquid delivery control method for delivering a liquid 8 by generating, in a microchannel 3 in which the liquid 8 is present, a differential pressure with respect to the liquid 8 by using a pump 6. The microchannel 3 is provided with a pressure loss varying portion 31 in which pressure loss changes in the direction of flow. The leading end 8a of the liquid 8 is judged to have reached the pressure loss varying portion 31 by detecting a change in pressure between the liquid 8 and the pump 6. With this arrangement, the location of the leading end of the liquid 8 can be properly detected without causing the structure that forms the microchannel 3 to become complex.

## Description

### TECHNICAL FIELD

The present invention relates to a liquid delivery control method and a liquid delivery control system, which enable the location of the leading end of a liquid delivered in a microchannel to be precisely determined.

### BACKGROUND ART

Delivery of a liquid in a microchannel is carried out in, for example, a blood analyzer that analyzes a specific component in blood. Blood analyzers dilute specimen blood to a prescribed dilution factor with, for example, a diluent followed by reacting the diluted blood with a reagent and detecting the development of color to analyze the presence and concentration of a specific component. In addition, blood analyzers count the numbers of blood cells such as erythrocytes or leukocytes according to changes in electrical resistance when diluted blood passes over a narrow cross-section. In order to carry out these analyses, it is necessary to deliver fixed amounts of blood, diluent as well as diluted blood from a certain location to another location as accurately as possible.

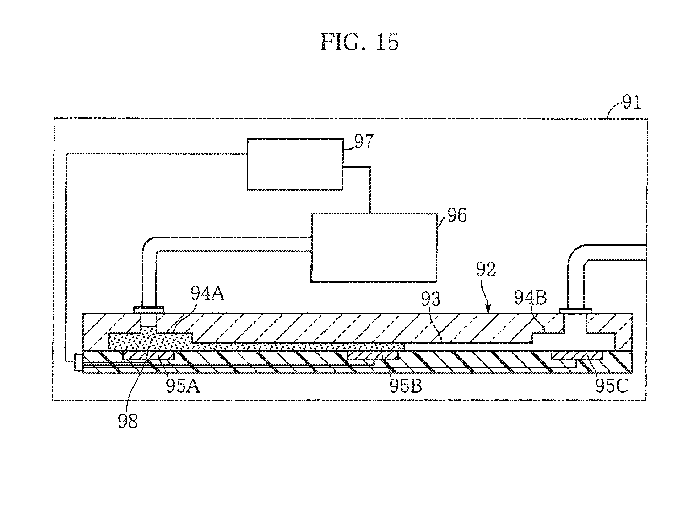

FIG. 15 shows an example of a conventional liquid delivery control system (see, for example, Patent Document 1). The liquid delivery control system shown in the figure comprises an analyzer 91 and a cartridge 92. The analyzer 91 is able to house the cartridge 92. The cartridge 92 includes a microchannel 93 for delivering a liquid 98 such as blood or diluent to a main body made of a resin, for example, and a starting reservoir 94A and an ending reservoir 94B, which are connected by the microchannel 93. A pump 96 is connected to the starting reservoir 94A via a pipe. The pump 96 is housed in the analyzer 91, and a differential pressure is generated in front of and behind the liquid 98 by increasing pressure on the upstream side of the liquid 98. A CPU 97 is provided in the analyzer 91.

In the liquid delivery control system shown in the figure, the location of the leading end of the liquid 98 is detected in the following manner. Electrodes 95A, 95B and 95C are provided in the cartridge 92. The electrode 95A is exposed in the starting reservoir 94A, the electrode 95C is exposed in the ending reservoir 94B, and the electrode 95B is exposed at a suitable location in the microchannel 93. These electrodes 95A, 95B and 95C are connected to the CPU 97 via wires and connectors provided in the cartridge 92. When a differential pressure is generated by the pump 96, the liquid 98 begins to be delivered from the starting reservoir 94A towards the ending reservoir 94B. When the liquid 98 reaches the electrode 95B, there is electrical continuity between the electrodes 95A and 95B. As a result, the CPU 97 judges that the leading end of the liquid 98 has reached the location of the electrode 95B. As liquid delivery continues, the liquid 98 reaches the ending reservoir 94B. As a result, there is electrical continuity between the electrodes 95A and 95C, and the CPU 97 judges that the liquid 98 has reached the ending reservoir 94B. If liquid delivery is temporarily interrupted when the liquid 98 has reached the electrode 95B, a fixed amount of the liquid 98 can be retained within the microchannel 93. In addition, once the liquid 98 has been determined to have reached the ending reservoir 94B, further unnecessary continuation of liquid delivery can be avoided.

In addition to the method described above that uses the presence or absence of electrical continuity between the electrodes 95A, 95B and 95C to detect the location of the liquid 98, another method has been proposed that consists of providing reflective films that reflect light at a plurality of locations in the microchannel 93, and then detecting whether or not light radiated towards the reflective films is blocked by the liquid 98.

However, the providing of the electrodes 95A, 95B and 95C along with the wires and connectors used to connect them ends up making the structure of the cartridge 92 complex. In addition, in the case of using the liquid 98 as a conductor, current flows through the liquid 98. As a result, there is the risk of the liquid 98 being electrolyzed by this current. In the case of detecting using light, it is necessary to provide the cartridge 92 with the above-mentioned reflective films as well as a portion for allowing transmission of light, again making the structure of the cartridge 92 complex. In addition, it is also necessary to provide the analyzer 91 with light-emitting devices such as LED modules as well as light-receiving devices such as photodiodes. Moreover, it is necessary to adjust the optical axis so that light from the LED modules and the like is properly radiated onto the reflective films.
Patent Document 1: JP-A-2007-71655

### DISCLOSURE OF THE INVENTION

### Problems to be solved by the Invention:

An object of the present invention, which is conceived under the above-described circumstances, is to provide a liquid delivery control method and a liquid delivery control system which are able to properly detect the leading end of a liquid without making the structure that forms a microchannel complex. Means for solving the problems:

According to a first aspect of the present invention, there is provided a liquid delivery control method for delivering a liquid by generating, in a microchannel in which the liquid is present, a differential pressure with respect to the liquid by using a differential pressure generation source. The method comprises the steps of providing, in the microchannel, a pressure loss varying portion in which pressure loss varies in the direction of flow, and judging that the leading end of the liquid has reached the pressure loss varying portion by detecting a change in pressure between the liquid and the differential pressure generation source.

Pressure loss as referred to in the present invention refers to resistance to which a liquid is subjected from the walls of a channel and the like when it flows through the channel, and a pressure loss varying portion refers to a portion at which pressure loss to which the liquid is subjected when flowing over a unit length changes in the direction of flow. The object of the present invention of detecting the location of the leading end of a liquid is achieved by utilizing the considerable change in resistance force attributable to surface tension that occurs when the leading end has reached the pressure loss varying portion.

In a preferred embodiment of the present invention, the pressure loss varying portion is a portion where the cross-sectional area is decreased or increased in the direction of flow.

In a preferred embodiment of the present invention, the pressure loss varying portion is defined by wall surfaces that have a larger surface roughness or higher water repellency than that of the wall surfaces that define the portions in front of and behind the pressure loss varying portion in the direction of flow.

In a preferred embodiment of the present invention, the pressure loss varying portion includes a portion at which the dimension in a direction perpendicular to the direction of flow discontinuously changes in the direction of flow.

According to a second aspect of the present invention, there is provided a liquid delivery control system comprising a microchannel for allowing a liquid to flow therethrough, and a differential pressure generation source for generating, in the microchannel, a differential pressure with respect to the liquid. The microchannel is provided with a pressure loss varying portion in which pressure loss varies in the direction of flow. The liquid delivery control system further comprises a pressure measurer for measuring pressure between the liquid and the differential pressure generation source, and a controller that judges that the leading end of the liquid has reached the pressure loss varying portion based on a change in the pressure measured by the pressure measurer.

In a preferred embodiment of the present invention, the pressure loss varying portion is a portion where the cross-sectional area is decreased or increased in the direction of flow.

In a preferred embodiment of the present invention, the pressure loss varying portion is defined by wall surfaces that have a larger surface roughness or higher water repellency than that of the wall surfaces that define the portions in front of and behind the pressure loss varying portion in the direction of flow.

In a preferred embodiment of the present invention, the pressure loss varying portion includes a portion at which the dimension in a direction perpendicular to the direction of low discontinuously changes in the direction of flow.

Other features and advantages of the present invention will become clear from the following detailed description of the invention provided with reference to the attached drawings.

### BRIEF DESCRIPTION OF THE DRAWINGS

FIG. 1 is a system block diagram showing an example of a liquid delivery control system according to the present invention;
FIG. 2 is an enlarged plan view showing a pressure loss varying portion provided in the liquid delivery control system shown in FIG. 1;
FIG. 3 is a system block diagram including a sectional view taken along line III-III in FIG. 1;
FIG. 4 is a graph of pressure change in a liquid delivery control method using the liquid delivery control system shown in FIG. 1;
FIG. 5 is a system block diagram showing the state of liquid delivery in the liquid delivery control system shown in FIG.
FIG. 6 is a system block diagram showing a state in which the liquid has reached a pressure loss varying portion in the liquid delivery control system shown in FIG. 1;
FIG. 7 is a system block diagram showing a state in which the liquid has been removed from a starting reservoir in the liquid delivery control system shown in FIG. 1;
FIG. 8 is a system block diagram showing the state of liquid delivery in the liquid delivery control system shown in FIG. 1;
FIG. 9 is a system block diagram showing a state in which the liquid has reached an ending reservoir in the liquid delivery control system shown in FIG. 1;
FIG. 10 is an enlarged plan view showing another example of a pressure loss varying portion provided in the liquid delivery control system according to the present invention;
FIG. 11 is a graph of pressure change in a liquid delivery control method using the pressure loss varying portion shown in FIG. 10;
FIG. 12 is an enlarged plan view showing still another example of a pressure loss varying portion provided in the liquid delivery control system according to the present invention;
FIG. 13 is a system block diagram showing another example of a liquid delivery control system according to the present invention;
FIG. 14 is a graph of pressure change in a liquid delivery control method using the liquid delivery control system shown in FIG. 13; and
FIG. 15 is a system block diagram showing an example of a conventional liquid delivery control system.

### BEST MODE FOR CARRYING OUT THE INVENTION

Preferred embodiments of the present invention are described below with reference to the drawings.

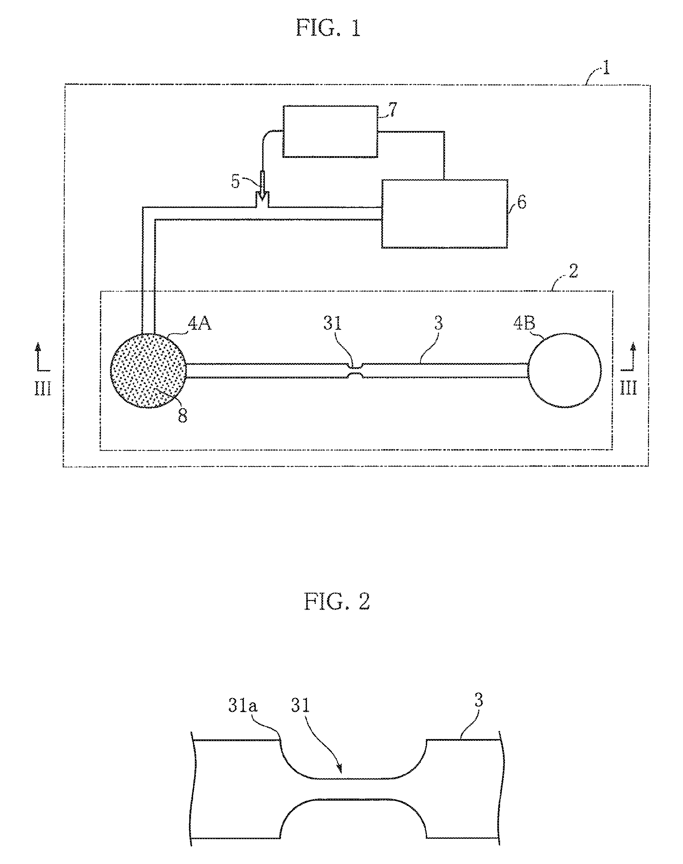

FIGS. 1 to 3 show an example of a liquid delivery control system according to the present invention. The liquid delivery control system of the present embodiment comprises an analyzer 1 and a cartridge 2. The analyzer 1 and the cartridge 2 use the liquid delivery control method according to the present invention to carry out analyses using an optical method on a specific component such as hemoglobin or C-reactive protein in blood, or to determine blood cell counts such as erythrocyte or leukocyte count.

The analyzer 1 is designed to allow the cartridge 2 to be mounted therein, and includes a pressure sensor 5, a pump 6 and a CPU 7. In addition to these constituents, the analyzer 1 further includes light-emitting means such as an LED module and light-receiving means such as a photodiode for carrying out analyzes using an optical method.

The pressure sensor 5 is disposed in a pathway that connects the pump 6 and the cartridge 2, and is for reading pressure in this portion. A relatively small pressure sensor is used as the pressure sensor 5, such as a semiconductor strain gauge-type pressure sensor or piezoelectric pressure sensor. Output signals from the pressure sensor 5 are sent to the CPU 7.

The pump 6 is a differential pressure generating source for generating a differential pressure in front of and behind a liquid 8 in order to deliver the liquid 8 within the cartridge 2. In the present embodiment, differential pressure is generated by applying positive pressure to the upstream side of the liquid 8.

The CPU 7 is a controller that controls operation of the analyzer 1. The pressure sensor 5, the pump 6, and the above-mentioned LED module and photodiode are connected to the controller. In order to realize a liquid delivery control method to be described later, the CPU 7 controls operation of the pump 6 by receiving output signals from the pressure sensor 5.

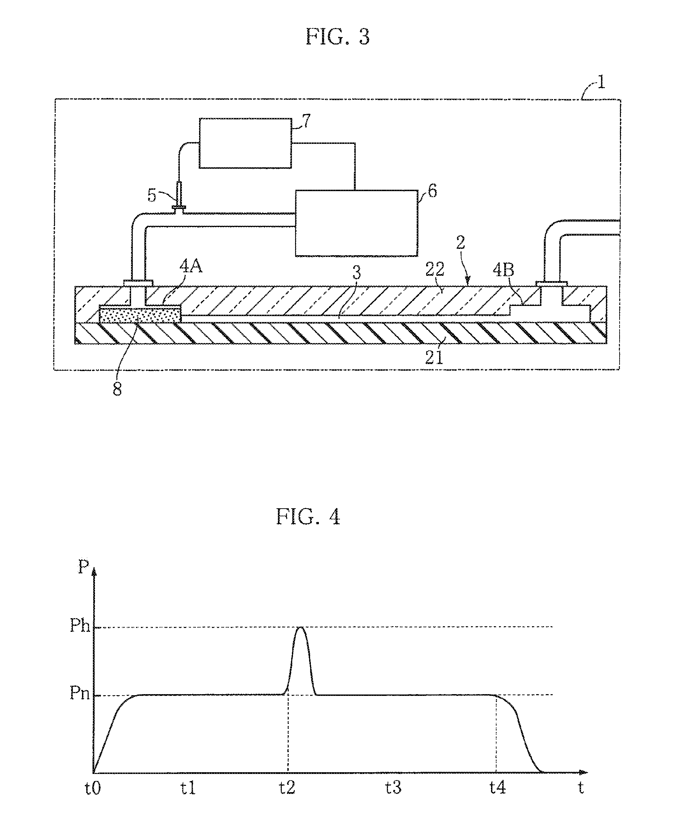

The cartridge 2 is mounted in the analyzer 1 and provides a field where blood serving as the analysis target of the analyzer 1 is diluted to a state suitable for analysis and then analyzed. As shown in FIG. 3, in the present embodiment, the cartridge 2 is made up of a substrate 21 and a transparent cover 22 which are bonded together, and is designed in the manner of a so-called disposable type in which it is disposed of following completion of a single analysis.

The substrate 21 is made of e.g. a resin such as an epoxy resin, and serves as the base of the cartridge 2. The transparent cover 22 is made of e.g. a transparent resin such as an acrylic or silicone resin, and allows transmission of light from the LED module. Minute surface irregularities are formed on the side of the transparent cover 22 that is laminated to the substrate 21. Thus, microchannel and a plurality of reservoirs required for analysis processing, including a microchannel 3, a starting reservoir 4A and an ending reservoir 4B, are formed in the cartridge 2.

The starting reservoir 4A. is a reservoir into which the liquid 8, such as blood, diluent or a diluted blood consisting of a mixture thereof, is introduced. In the case where the liquid 8 is blood, blood sampled from a test subject is dropped into the starting reservoir 4A with a dropper and the like. In the case where the liquid 8 is a diluent, the starting reservoir 8 may retain the diluent in advance or a prescribed amount of diluent may be introduced from the analyzer 1 into the reservoir. In the case where the liquid 8 is diluted blood, blood and diluent may be mixed and agitated in the starting reservoir 8. The pump 6 is connected to the starting reservoir 4A in the state in which the cartridge 2 is mounted in the analyzer 1.

The ending reservoir 4B is a reservoir into which the liquid 8 is delivered from the starting reservoir 4A. In the case where the liquid 8 is blood or diluent, the ending reservoir 4B may be used to mix and agitate the blood and diluent. In the case where the liquid 8 is diluted blood, the ending reservoir 4B may serve as a location for carrying out analysis processing on the diluted blood, or retain the diluted blood following completion of analysis processing. In the present embodiment, the ending reservoir 4B is open to the atmosphere via a pathway within the analyzer 1.

The microchannel 3 connects the starting reservoir 4A and the ending reservoir 4B, and is a pathway for delivering the liquid 8 from the starting reservoir 4A to the ending reservoir 4B. A pressure loss varying portion 31 is formed in the microchannel 3. The pressure loss varying portion 31 is a portion in which pressure loss varies considerably in the direction of flow, and in the present embodiment, is provided by partially reducing the width of the microchannel 3 as shown in FIG. 2. More specifically, in contrast to the width of the microchannel 3 at locations other than the pressure loss varying portion 31 being about 200 the width of the pressure loss varying portion 31 is about 80 µm. Discontinuous portions 31a, at which the width discontinuously changes, are provided on the upstream end and downstream end of the pressure loss varying portion 31. A constant width portion other than the pressure loss varying portion 31 and circular arc sections of the pressure loss varying portion 31, which are provided near the upstream end and near the downstream end thereof, are connected at the discontinuous portions 31a. The height of the microchannel 3, including the pressure loss varying portion 31, is constant at about 200 µm.

A liquid delivery control method that uses the analyzer 1 and the cartridge 2 is described below with reference to FIG. 1 and FIGS. 4 to 8.

FIG. 4 shows a pressure P detected by the pressure sensor 5 in this liquid delivery control method. The pressure P is a relative pressure based on a value of 0 for atmospheric pressure, and is equivalent to the pressure difference in front of and behind the liquid 8. Time t is plotted on the horizontal axis. First, as shown in FIG. 1, the liquid 8 is introduced into the starting reservoir 4A at time t0. At this time, the pump 6 does not operate and a differential pressure capable of delivering the liquid 8 is not generated.

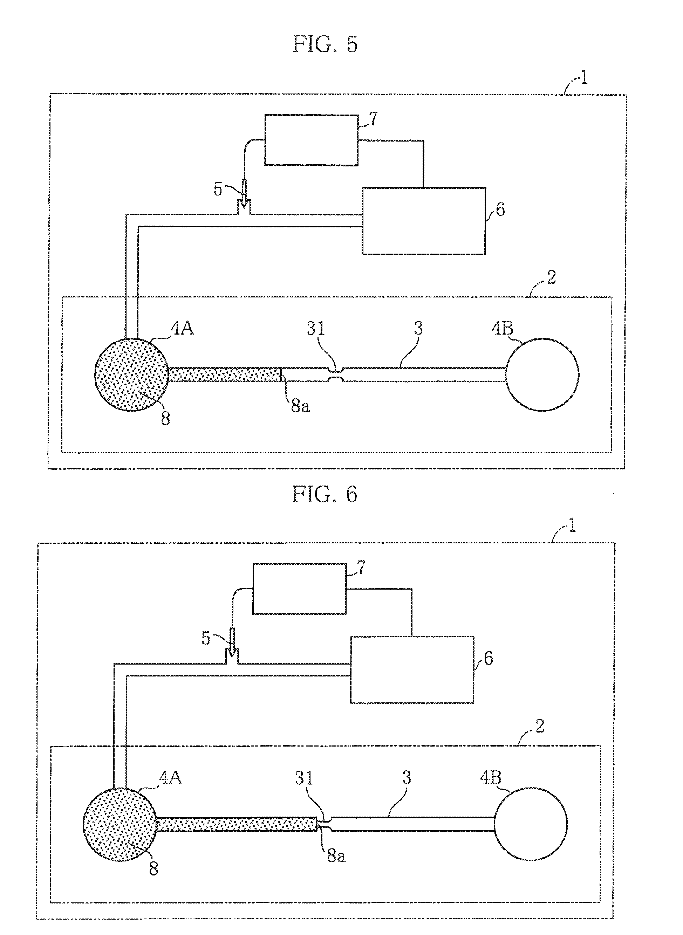

Next, the pump 6 begins to apply positive pressure according to a command from the CPU 7. As a result, the pressure P rises and differential pressure is generated in front of and behind the liquid 8. This being the case, as shown in FIG. 5, the liquid 8 begins to be delivered towards the ending reservoir 4B. This figure shows a state in which the leading end 8a of the liquid 8 has reached a location between the starting reservoir 4A and the pressure loss varying portion 31 at time t1 in FIG. 4. The pressure P at this time is a normal pressure Pn of about e.g. 1 kPa.

As the liquid continues to be delivered, as shown in FIG. 6, the leading end 8a reaches the pressure loss varying portion 31. When the leading end 8a comes into contact with the discontinuous portion 31a in particular, large resistance force is generated due to the action of surface tension. Consequently, as shown in FIG. 4, the pressure P in the pathway between the starting reservoir 4A and the pump 6 rises in a stepwise manner at time t2. The pressure P at this time is a high pressure Ph of about 2 kPa. The CPU 7 judges that the leading end 8a of the liquid 8 has reached the pressure loss varying portion 31 when the pressure P has risen from the normal pressure Pn to the high pressure Ph, based on an output signal from the pressure sensor 5.

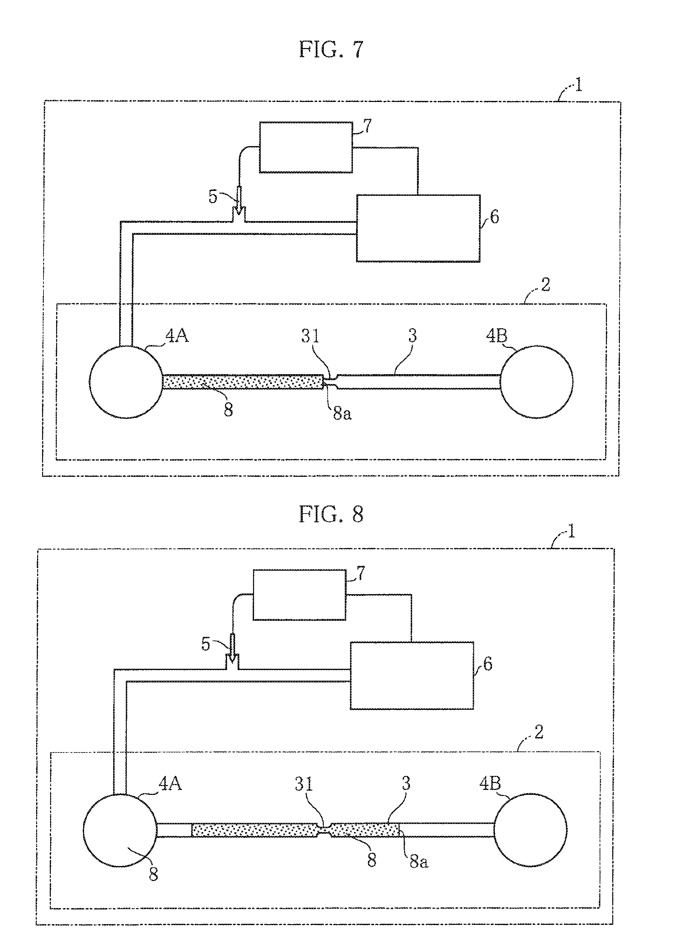

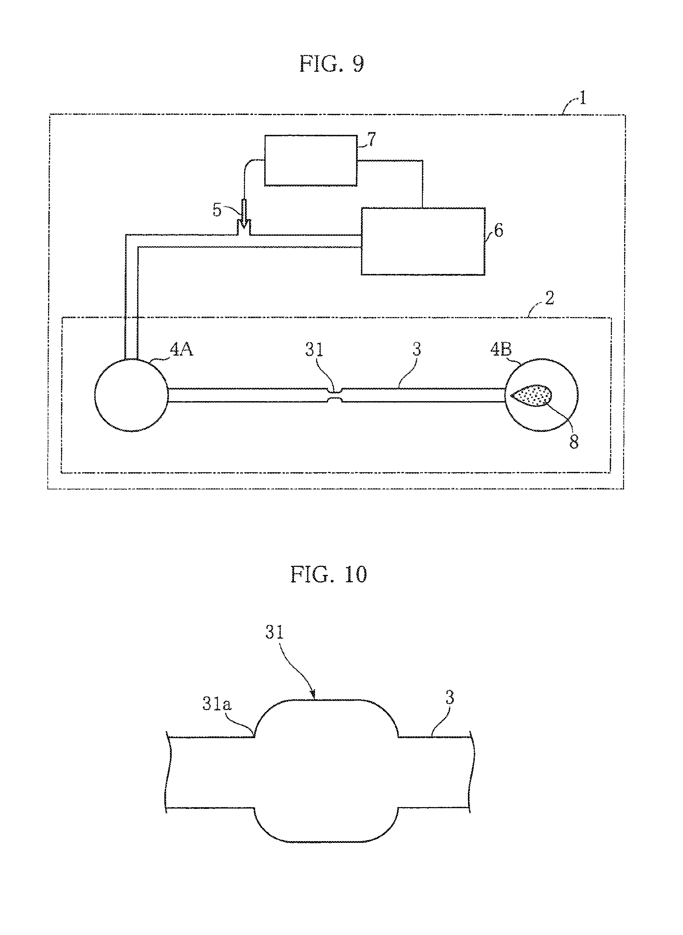

During analysis processing by the analyzer 1 and the cartridge 2, the CPU 7 uses the arrival of the liquid 8 at the pressure loss varying portion 31 as a trigger for beginning a certain process. For example, if the application of positive pressure from the pump 6 is temporarily interrupted at time t2 and the liquid 8 remaining in the starting reservoir 4A is delivered to another reservoir, a prescribed amount of the liquid 8 can be retained in the microchannel 3, as shown in FIG. 7. When the application of positive pressure from the pump 6 is then resumed, the prescribed amount of the liquid 8 begins to move through the microchannel 3 as shown in FIG. 8 at time t3. The prescribed amount of the liquid 8 is then delivered to the ending reservoir 4B as shown in FIG. 9 at time t4. In the case where the liquid 8 is blood, a prescribed amount of blood can be retained in preparation for agitation in the ending reservoir 4B serving as an agitation reservoir. Alternatively, in the case where the liquid 8 is diluted blood, a prescribed amount of the diluted blood can be introduced into the ending reservoir 4B that serves as a location for carrying out analysis.

The advantages of the liquid delivery control method and liquid delivery control system of the present embodiment are described below.

According to the present embodiment, in order to detect the arrival of the leading end 8a of the liquid 8 at the pressure loss varying portion 31 of the microchannel 3, it is not necessary to provide a plurality of electrodes, wires, connectors or reflective films in the cartridge 2 or provide light-emitting means and light-receiving means for detecting location in the analyzer 1. In the present embodiment, the only component that is provided exclusively for detecting the location of the leading end 8a is the pressure sensor 5. This pressure sensor 5 is not required to be provided in the cartridge 2, but rather is only required to be installed at a suitable location in the pathway that connects the pump 6 and the cartridge 2. Thus, the arrival of the leading end 8a of the liquid 8 at the pressure loss varying portion 31 can be properly detected without causing the structure of the analyzer 1 and the cartridge 2 to become excessively complex.

Since the pressure loss varying portion 31 is a portion where the cross-sectional area is partially reduced, when the leading end 8a reaches the pressure loss varying portion 31, a resistance force acts that inhibits delivery of the liquid 8. Thus, if application of pressure from the pump 6 is interrupted at the time the pressure P has increased in a stepwise manner from the normal pressure Pn to the high pressure Ph, the leading end. 8a of the liquid 8 can be reliably retained in the pressure loss varying portion 31. This is suitable for retaining a prescribed amount of the liquid 8 in the microchannel 3.

Moreover, the discontinuous portion 31a provided in the upstream end of the pressure loss varying portion 31 generates a considerably large resistance force due to surface tension when the leading end 8a has come into contact therewith. Due to this resistance force, it becomes easier for the leading end 8a to be retained in the upstream end of the pressure loss varying portion 31. This is preferable for retaining a prescribed amount of the liquid 8 in the microchannel 3.

FIGS. 10 to 14 show other embodiments of the present invention. In these figures, the elements that are identical or similar to those of the foregoing embodiment are designated by the same reference signs as those used in the foregoing embodiment.

FIG. 10 shows another example of a pressure loss varying portion of a liquid delivery control system according to the present invention. The pressure loss varying portion 31 shown in this figure has a width which is larger than that of the portions in front of and behind it. The portions where the pressure loss varying portion 31 and the portions in front of and behind it are connected comprise discontinuous portions 31a.

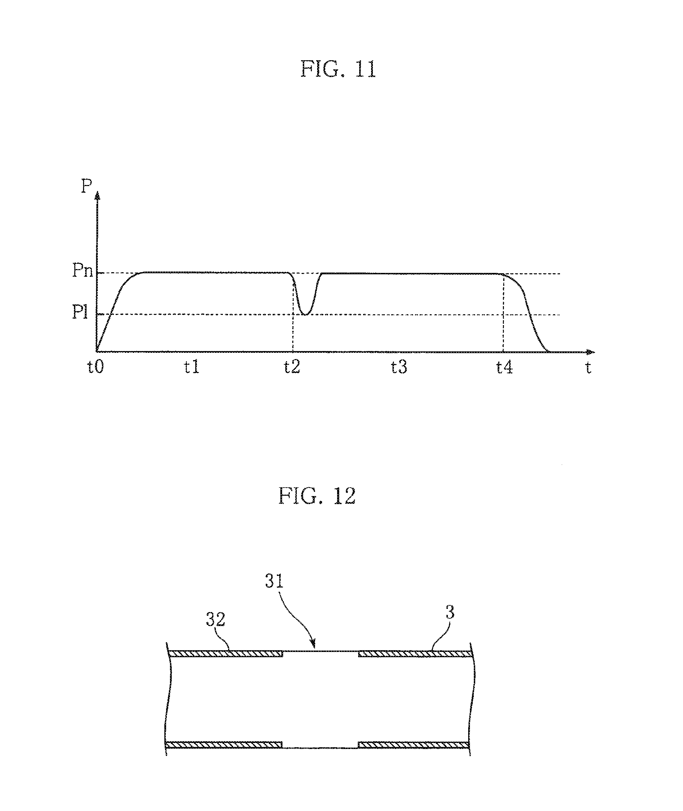

FIG. 11 is a graph showing the pressure P in a liquid delivery control method that uses a liquid delivery control system provided with this type of pressure loss varying portion 31. Liquid delivery begins at time t0, and the leading end 8a of the liquid 8 reaches the pressure loss varying portion 31 at time t2. At this time t2, since the liquid 8 enters a portion in which the cross-sectional area increases rapidly, the pressure P rapidly decreases from the normal pressure Pn to a low pressure P1. When this pressure change is detected by the pressure sensor 5, the CPU 7 judges that the leading end 8a has reached the pressure loss varying portion 31. According to this embodiment as well, arrival of the leading end 8a of the liquid 8 at the pressure loss varying portion 31 can be properly detected without causing the structure of the analyzer 1 and the cartridge 2 to become excessively complex.

FIG. 12 shows still another example of a pressure loss varying portion of a liquid delivery control system according to the present invention. In the present embodiment, the pressure loss varying portion 31 is formed by dividing the inner surface of the microchannel 3 into a portion that is comparatively water-repellent and a portion that is comparatively hydrophilic. The microchannel 3 has a uniform cross-sectional area. A hydrophilic treatment agent 32 is applied to the inner surface of the microchannel 3. However, there is also an intermittent portion of the inner surface of the microchannel 3 where this hydrophilic treatment agent 32 is not applied. In this portion, liquid is repelled more easily than in other portions, and this portion serves as the pressure loss varying portion 31.

When the leading end 8a of the liquid 8 that has been delivered through the microchannel 3 reaches the pressure loss varying portion 31, surface tension increases rapidly. The pressure P rises rapidly due to resistance force generated by this sudden increase in surface tension. This pressure change is transmitted from the pressure sensor 5 to the CPU 7, so that the CPU 7 detects that the leading end 8a of the liquid 8 has reached the pressure loss varying portion 31.

According to this embodiment as well, arrival of the leading end 8a of the liquid 8 at the pressure loss varying portion 31 can be properly detected without causing the structure of the analyzer 1 and the cartridge 2 to become excessively complex. In addition, the pressure loss varying portion 31 can be formed without increasing or decreasing the cross-sectional area of the microchannel 3. Change in the pressure P can be further increased by providing surface treatment that enhances water repellency at the portion corresponding to the pressure loss varying portion 31.

Moreover, the pressure loss varying portion 31 may also be provided by carrying out surface treatment on a portion of the inner surface of the microchannel 3 so that surface roughness at that portion becomes larger than those portions in front and behind thereof in the direction of flow. The larger the surface roughness of the inner surface is, the greater the resistance force applied to the leading end 8a of the liquid 8 is. Thus, it is possible to cause the pressure P to rise rapidly, thereby making it possible to detect that the leading end 8a has reached the pressure loss varying portion 31.

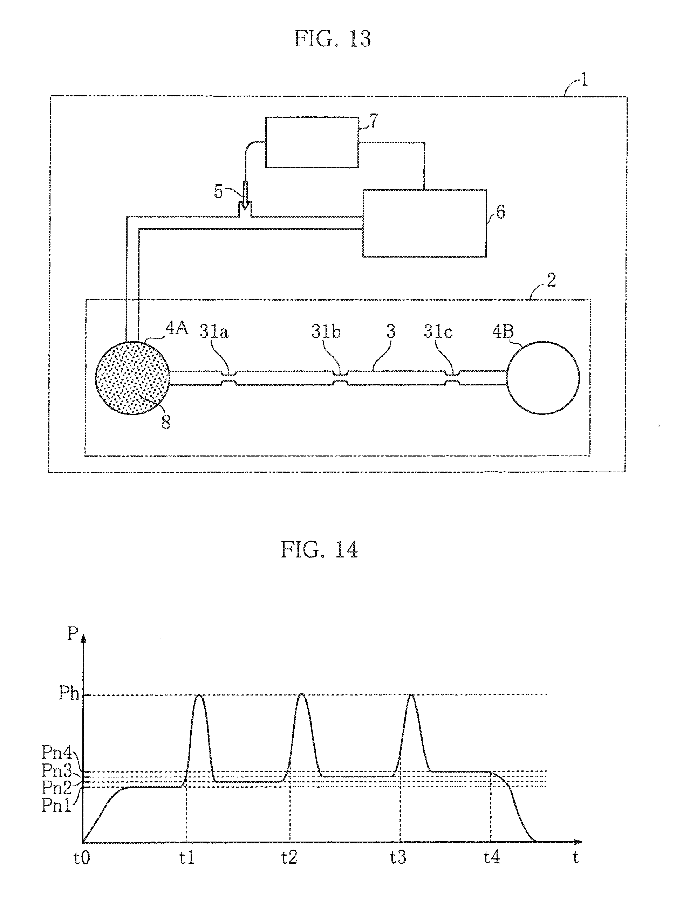

FIG. 13 shows another example of a liquid delivery control system according to the present invention. The liquid delivery control system of the present embodiment differs from the liquid delivery control system shown in FIG. 1 in that three pressure loss varying sections 31a, 31b and 31c are provided in the microchannel 3. These pressure loss varying portions 31a, 31b and 31c are arranged along a straight line at intervals in the direction of flow. The respective configurations of the pressure loss varying portions 31a, 31b and 31c are the same as that of the pressure loss varying portion 31 shown in FIG. 2.

FIG. 14 is a graph showing the pressure P in a liquid delivery control method that uses the liquid delivery control system of the present embodiment. The liquid 8 begins to be delivered from the starting reservoir 4A at time t0 and the leading end 8a reaches the pressure loss varying portion 31a at time t1. At this time, the pressure P rises from a normal pressure Pn1 to the high pressure Ph. As a result, the CPU 7 detects that the leading end 8a has reached the pressure loss varying portion 31a. When the leading end 8a passes the pressure loss varying portion 31a at a time beyond time t1, the pressure P changes to a normal pressure Pn2 in order to deliver the liquid 8. The normal pressure Pn2 is slightly higher than the normal pressure Pn1. This is due to the addition of pressure loss generated, when the liquid 8 passes through the pressure loss varying portion 31a having a smaller cross-sectional area. Normal pressures Pn3 and Pn4 subsequently also gradually become higher for the same reason.

Next, when the leading end 8a reaches the pressure loss varying portion 31b at time t2, the pressure P again rises from the normal pressure Pn2 to the high pressure Ph. As a result the CPU 7 detects that the leading end 8a has reached the pressure loss varying portion 31b. The leading end 8a then reaches the pressure loss varying portion 31c at time t3 after having been delivered at the normal pressure Pn3 that is slightly higher than the normal pressure Pn2. When this happens, the pressure P rises from the normal pressure Pn3 to the high pressure Ph, and the CPU 7 detects that the leading end 8a has reached the pressure loss varying portion 31c. Subsequently, the leading end 8a reaches the ending reservoir 4B at time t4 after having been delivered at the normal pressure Pn4 that is slightly higher than the normal pressure Pn3.

In this manner, by providing a plurality of pressure loss varying portions 31a, 31b and 31c in the single microchannel 3, the pressure P rises to the high pressure Ph by a number of times equal to the number of the pressure loss varying portions 31a, 31b and 31c. Since these pressure rises do not occur simultaneously, the pressure rises is discretely detected by the pressure sensor 5 and the CPU 7. Thus, the leading end 8a can be sequentially detected to have reached a plurality of locations in the direction of flow.

The liquid delivery control method and liquid delivery control system according to the present invention are not limited to the embodiments described above. The specific structure of the liquid delivery control method and liquid delivery control system according to the present invention can be varied in design in various ways.

In the case of partially changing the cross-sectional area as means for forming the pressure loss varying portion 31, height, for example, may be partially varied in addition to or instead of partially varying width. A negative pressure may be applied to the downstream side of the liquid 8 instead of applying a positive pressure to the upstream side of the liquid 8 in order to generate differential pressure in front of and behind the liquid 8. The liquid delivery control method and liquid delivery control system according to the present invention do not necessarily need to be designed as an analyzer and a cartridge for testing blood as previously described, but may instead be used in an application such as quantitatively delivering a liquid within a microchannel or carrying out liquid delivery with even greater accuracy for the timing of that liquid delivery.

## Claims

1. A liquid delivery control method for delivering a liquid by generating, in a microchannel in which the liquid is present, a differential pressure with respect to the liquid by using a differential pressure generation source, the method comprising:
providing, in the microchannel, a pressure loss varying portion in which pressure loss varies in a direction of flow; and
judging that a leading end of the liquid has reached the pressure loss varying portion by detecting a change in pressure between the liquid and the differential pressure generation source.

2. The liquid delivery control method according to claim 1, wherein the pressure loss varying portion is a portion where a cross-sectional area is decreased or increased in the direction of flow.

3. The liquid delivery control method according to claim 1, wherein the pressure loss varying portion is defined by wall surfaces that have a larger surface roughness or higher water repellency than that of wall surfaces that define portions in front of and behind the pressure loss varying portion in the direction of flow.

4. The liquid delivery control method according to claim 2, wherein the pressure loss varying portion includes a portion at which a dimension in a direction perpendicular to the direction of flow discontinuously changes in the direction of flow.

5. A liquid delivery control system, comprising:
a microchannel for allowing a liquid to flow therethrough; and
a differential pressure generation source for generating, in the microchannel, a differential pressure with respect to the liquid;
the microchannel being provided with a pressure loss varying portion in which pressure loss varies in a direction of flow;
wherein the liquid delivery control system further comprises:
a pressure measurer for measuring pressure between the liquid and the differential pressure generation source; and
a controller that judges that a leading end of the liquid has reached the pressure loss varying portion based on a change in the pressure measured by the pressure measurer.

6. The liquid delivery control system according to claim 5, wherein the pressure loss varying portion is a portion where a cross-sectional area is decreased or increased in the direction of flow.

7. The liquid delivery control system according to claim 5, wherein the pressure loss varying portion is defined by wall surfaces that have a larger surface roughness or higher water repellency than that of wall surfaces that define portions in front of and behind the pressure loss varying portion in the direction of flow.

8. The liquid delivery control system according to claim 6, wherein the pressure loss varying portion includes a portion at which a dimension in a direction perpendicular to the direction of flow discontinuously changes in the direction of flow.
